# EUROPÄISCHE PATENTSCHRIFT

(11) **EP 1 028 405 B1**
(45) Veröffentlichungstag und Bekanntmachung des Hinweises auf die Patenterteilung: **30.08.2006**
(21) Anmeldenummer: 00101923.1
(22) Anmeldetag: 01.02.2000
(51) Int. Cl.: G08G 1/0968, G08G 1/09

(54) **Verfahren zur Übertragung von auf Orte bezogenen Informationen**
Method to transmit information related to a place
Procédé de transmission d'information relative à un lieu

(30) Priorität: 10.02.1999 DE 19905431
(43) Veröffentlichungstag der Anmeldung: 16.08.2000
(73) Patentinhaber: ROBERT BOSCH GMBH, 70442 Stuttgart (DE)
(72) Erfinder: Duckeck, Ralf, 31137 Hildesheim (DE)

(56) Entgegenhaltungen:
- EP-A- 0 829 977
- WO-A-98/24079
- GB-A- 2 271 420
- DUCKECK R ET AL: "TMC (TRAFFIC MESSAGE CHANNEL) DAS VERKEHRSFUNKSYSTEM VON MORGEN" ITG-FACHBERICHTE, VDE VERLAG, BERLIN, DE, Bd. 106, 14. November 1988 (1988-11-14), Seiten 137-145, XP000607384 ISSN: 0932-6022

## Beschreibung

Die Erfindung betrifft ein Verfahren zur Übertragung von auf Orte bezogenen Informationen zwischen einer Navigationseinrichtung, die eine erste Ortsdatenbank enthält, bei welcher Koordinatenpaare der Orte und Deskriptoren den Ortsangaben zugeordnet sind, und einem Empfänger für digital codierte Verkehrsmeldungen, der eine zweite Ortsdatenbank enthält, sowie einen zur Durchführung des Verfahrens geeigneten Empfänger und eine Navigationseinrichtung.

In Kraftfahrzeugen werden in zunehmendem Maße elektronische Geräte eingesetzt, die dem Fahrer Informationen vermitteln. Um den Fahrer zu einem gewählten Ziel zu führen, sind Navigationseinrichtungen bekanntgeworden, bei denen anhand einer digitalen Straßenkarte und Sensoren zur Ermittlung des jeweiligen Ortes des Fahrzeugs, beispielsweise Satellitenortungsgeräte, eine möglichst günstige Route zum Ziel berechnet wird und dem Fahrer entsprechende Hinweise gegeben werden. Dabei ist die sogenannte digitale Straßenkarte in einer Ortsdatenbank abgelegt - im folgenden auch Kartendatenbank genannt -, bei welcher die zur Zielführung notwendigen Orte mit ihren geographischen Koordinaten abgelegt sind.

Zur Information des Fahrers über Verkehrsbehinderungen sind verschiedene Verkehrsfunksysteme bekanntgeworden. Dazu gehört das TMC-System, bei welchem digital codierte Verkehrsmeldungen senderseitig erzeugt und in Empfängern decodiert werden. Einzelheiten dazu sind beschrieben in EP 0 263 332 B1, DE 38 10 177 A1 und DE 38 10 179 A1.

Zur Decodierung dieser digital codierten Verkehrsmeldungen ist im Empfänger mindestens eine Ortsdatenbank erforderlich, bei welcher ausgewählte Orte nach Straßen sortiert aufgeführt sind - beispielsweise Anschlußstellen und Kreuzungen.

Die Navigationseinrichtungen verschiedener Hersteller weisen jedoch verschiedene Datenformate und Referenzierungen innerhalb der Kartendatenbanken auf. Dadurch ist ein Austausch von Informationen zu einem bestimmten Ort zwischen unterschiedlichen Systemen unmöglich. Damit die Navigationseinrichtungen untereinander in soweit kompatibel sind und von einem Dienstleister, der die Kartendatenbanken aktualisiert, angesprochen werden können, wird derzeit an einem Projekt der Europäischen Kommission - EVIDENCE genannt - gearbeitet, bei welchem ein ILOC-Verfahren (ILOC = Intersection Location) vorgeschlagen wird. Diese Vorschläge führen jedoch nicht dazu, daß digital codierte Verkehrsmeldungen ohne manuelle Eingabe in den bekannten Navigationseinrichtungen berücksichtigt werden können.

WO-A-98 24079 offenbart ein Verfahren zur Übertragung von auf Orte bezogenen Informationen, beispielsweise Verkehrsinformationen, wobei zur empfängerseitigen Zuordnung der Informationen sowohl Ortskoordinaten, auf die sich die Informationen beziehen, als auch die bezogenen Orte beschreibende Informationen, namentlich Ortsnamen, übertragen werden. Weiter offenbart WO-A-98 24079 die Übertragung von Ortsnamen, die mit in der empfängerseitigen Ortsdatenbank enthaltenen Ortsnamen verglichen werden.

Aufgabe der Erfindung ist es, den Austausch von auf Orte bezogenen Informationen zwischen einer Navigationseinrichtung und einem Empfänger für digital codierte Verkehrsmeldungen zu verbessern.

Diese Aufgabe wird durch die Merkmale des unabhängigen Patentanspruchs gelöst,

Durch das erfindungsgemäße Verfahren können empfangene digitale Verkehrsmeldungen von dem Empfänger zu einer Navigationseinrichtung übertragen werden, so daß beispielsweise von der Navigationseinrichtung festgelegte Routenempfehlungen entsprechend gegebenenfalls auftretender Verkehrsstörungen automatisch geändert werden können bzw. zuvor eingetroffene und gespeicherte Verkehrsmeldungen bei Neuberechnung einer Fahrtroute berücksichtigt werden.

Das erfindungsgemäße Verfahren kann auch dazu dienen, von einer Navigationseinrichtung zu einem Empfänger für digital codierte Verkehrsmeldungen Informationen zu übertragen, beispielsweise kann anhand der Koordinaten durch Annäherung und Vergleich der Deskriptoren der dazugehörige Ort im TMC-System in der Tabelle gefunden werden und dazu verwendet werden, um bei einem Empfänger für digitale Verkehrsmeldungen - im folgenden auch TMC-Empfänger genannt - eine Meldung zu kreieren und per Sprache dem Nutzer mitzuteilen. Außerdem kann von der Navigationseinrichtung der jeweilige Standort dem TMC-Empfänger zugeführt werden, um bei einer Selektion von empfangenen Verkehrsmeldungen genutzt zu werden.

Selbst wenn die Koordinatenpaare nach der gleichen Norm, beispielsweise WGS84, gebildet sind, kann es aufgrund ihrer unterschiedlichen Quelle zu geringfügigen Abweichungen kommen. Außerdem werden beim TMC-System und bei den Navigationseinrichtungen die Orte unterschiedlich definiert. Es ist deshalb bei einer Weiterbildung des erfindungsgemäßen Verfahrens vorgesehen, daß zum Auslesen Koordinatenpaare der jeweiligen Ortsdatenbank verwendet werden, die innerhalb eines Toleranzbereichs der übertragenen Koordinatenpaare liegen.

Die Angabe des Koordinatenpaares ist nicht für alle Orte eindeutig. So weisen beispielsweise in verschiedenen Ebenen liegende Orte, also solche auf und unter einer Brücke, das gleiche Koordinatenpaar auf, müssen jedoch in dem jeweiligen System unterschieden werden. Um hier Fehler auszuschließen, ist bei den erfindungemäßen Verfahrens vorgesehen, daß mit den Informationen ferner Deskriptoren übertragen werden, die mit gegebenenfalls vorhandenen gleichartigen Deskriptoren in der jeweiligen Ortsdatenbank verglichen werden. Dabei können die übertragenen Deskriptoren Straßennummern und/oder Abzweigungsnummern sein.

Verkehrsmeldungen, die nicht autobahnbezogen sind, können nicht immer eine eindeutige Ortsangabe zugeordnet werden. In diesem Fall wird eine sogenannte LLOC (Link-Location) kreiert, wobei die übertragenen Deskriptoren die Endpunkte eines Straßensegments sind.

Vorteilhafte Ausgestaltungen des erfindungsgemäßen Verfahrens sind dadurch gegeben, daß die Informationen vom Empfänger empfangen und zur Navigationseinrichtung übertragen werden oder daß die Informationen von der Navigationseinrichtung zum Empfänger für digital codierte Verkehrsmeldungen übertragen werden.

Ein Empfänger für digital codierte Verkehrsmeldungen zür Dürch führung des erfindungsgemäßen verfahrens umfasst eine Einrichtung zur Übertragung von auf Orte bezogenen Informationen zwischen einer Navigationseinrichtung, die eine erste Ortsdatenbank enthält, bei welcher Koordinatenpaare der Orte und Deskriptoren den Ortsangaben zugeordnet sind, und dem Empfänger, der eine zweite Ortsdatenbank enthält, wobei in der zweiten Ortsdatenbank zu den darin enthaltenen Ortsangaben außer Deskriptoren Koordinatenpaare der Orte abgelegt sind und wobei mit den zu übertragenden Informationen mindestens das Koordinatenpaar des Ortes übertragbar ist, auf den die Informationen bezogen sind, und mit dessen aus der jeweiligen Ortsdatenbank die Ortsangabe auslesbar ist.

Eine Navigationseinrichtung, die eine erste Ortsdatenbank enthält, bei welcher Koordinatenpaare der Orte und Deskriptoren den Ortsangaben zugeordnet sind, umfasst eine Einrichtung zur Übertragung von auf Orte bezogenen Informationen zwischen der Navigationseinrichtung und einem Empfänger für digital codierte Verkehrsmeldungen, der eine zweite Ortsdatenbank enthält, in welcher zu den darin enthaltenen Ortsangaben außer Deskriptoren Koordinatenpaare der Orte abgelegt sind, wobei mit den zu übertragenden Informationen mindestens das Koordinatenpaar des Ortes übertragbar ist, auf den die Informationen bezogen sind, und mit dessen Hilfe aus der jeweiligen Ortsdatenbank die Ortsangabe auslesbar ist.

Ausführungsbeispiele der Erfindung sind in der Zeichnung anhand mehrerer Figuren dargestellt und in der nachfolgenden Beschreibung näher erläutert. Es zeigt:
- Fig. 1: schematisch eine Verbindung zwischen einer Navigationseinrichtung und einem Empfänger für digital codierte Verkehrsmeldungen,
- Fig. 2: eine Straßenkreuzung,
- Fig. 3: eine Codierung des Ortes dieser Straßenkreuzung für eine Navigationseinrichtung und
- Fig. 4: eine Codierung des gleichen Ortes für einen TMC-Empfänger.

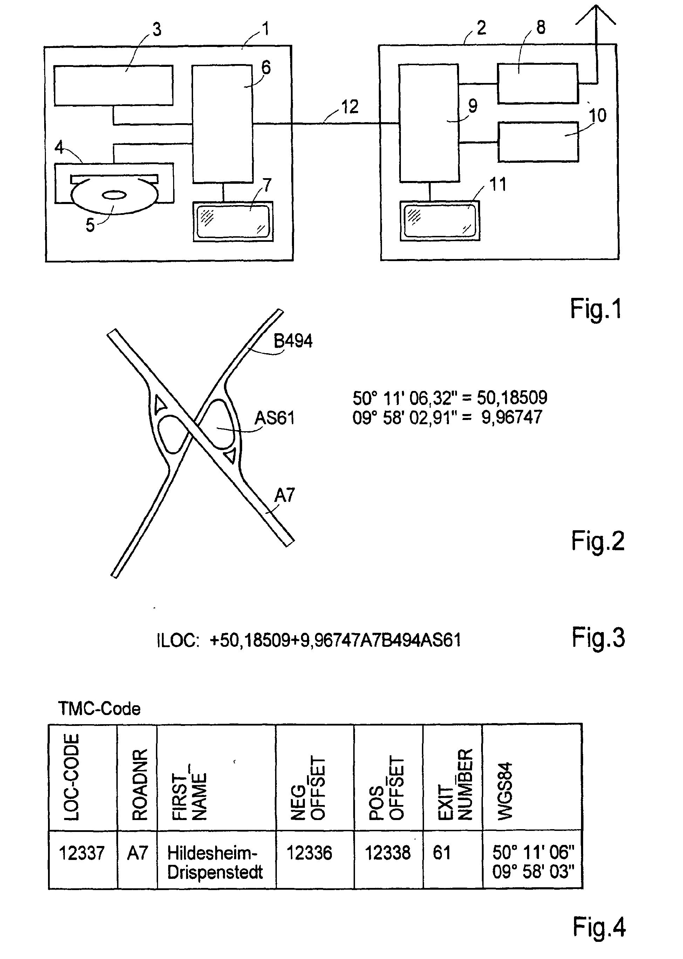

Von einer Navigationseinrichtung 1 und einem TMC-Empfänger 2 sind in Fig. 1 lediglich schematisch die zum Verständnis der Erfindung erforderlichen Teile dargestellt. Die Navigationseinrichtung 1 enthält ein Ortungsgerät, beispielsweise einen GPS-Empfänger 3, und ein Laufwerk 4 mit einem CD-ROM 5, auf dem die Kartendatenbank abgelegt ist. Ein Mikrocomputer 6 dient unter anderem zur Berechnung der Fahrtrouten und zur Erzeugung der jeweils erforderlichen Fahrtempfehlungen, beispielsweise "nach rechts abbiegen", die auf einem Display 7 angezeigt oder - was nicht dargestellt ist - per Sprachsynthese und Lautsprecher ausgegeben werden können.

Der Empfänger 2 weist ein Empfangsteil 8, einen Mikrocomputer 9 und einen Speicher 10 auf, der unter anderem zur Speicherung der Ortsdatenbank dient. Der TMC-Empfänger 2 weist ebenfalls eine Ausgabeeinrichtung, beispielsweise ein Display 11, auf. Dieses dient zur Anzeige der empfangenen und decodierten Verkehrsmeldungen neben anderen Informationen, beispielsweise dem eingestellten Sender.

Die Mikrocomputer 6, 9 sind unter Verwendung entsprechender an sich bekannter Schnittstellen über eine Datenleitung 12 miteinander verbunden, so daß Informationen gemäß der Erfindung ausgetauscht werden können.

In dem anhand der Figuren 2 bis 4 dargestellten Beispiel soll eine Information übertragen werden, welche die in Fig. 2 dargestellte Anschlußstelle 61 der Autobahn A7 betrifft. Die Anschlußstelle verbindet die Bundesstraße B494 mit der Autobahn A7 und weist das in Fig. 2 sowohl in herkömmlichen Winkeleinheiten als auch dezimal dargestellte Koordinatenpaar auf.

Fig. 3 zeigt die Codierung der Anschlußstelle nach ILOC, wobei zunächst mit vorangestelltem Pluszeichen die beiden Koordinaten angegeben sind, worauf die beiden Straßen, welche sich bei der Anschlußstelle kreuzen, und dann die Anschlußstelle selbst folgen.

Fig. 4 stellt eine Zeile aus einer Ortsdatenbank für TMC-Meldungen gemäß ALERT-Standard EN12313-1 dar. Auf einen Ortscode für die in Fig. 2 dargestellte Anschlußstelle folgt die Straßennummer, nämlich A7, und dann der erste Name. Weitere Namen sind gemäß ALERT-Standard möglich, hier jedoch nicht gezeigt. Dann folgt ein weiterer Ortscode als "negativer Offset", womit die vorangegangene Anschlußstelle gemeint ist, und als "positiver Offset" die folgende Anschlußstelle. Schließlich ist noch die Nummer der Anschlußstelle 61 angegeben. Für eine kompatible Übertragung von Daten zu oder von einer Navigationseinrichtung enthält die Ortsdatenbank ferner je Ortscode ein Koordinatenpaar nach WGS84.

## Patentansprüche

1. Verfahren zur Übertragung von auf Orte bezogenen Informationen zwischen einer Navigationseinrichtung, die eine erste Ortsdatenbank enthält, bei welcher Koordinatenpaare der Orte und Deskriptoren den Ortsangaben zugeordnet sind, und einem Empfänger für digital codierte Verkehrsmeldungen, der eine zweite Ortsdatenbank enthält,
- wobei in der zweiten Ortsdatenbank zu den darin enthaltenen Ortsangaben außer Deskriptoren Koordinatenpaare der Orte abgelegt sind,
- wobei mit den zu übertragenden Informationen mindestens das Koordinatenpaar des Ortes übertragen wird, auf den die Informationen bezogen sind,
- wobei mit Hilfe mindestens des übertragenen Koordinatenpaares aus der jeweiligen Ortsdatenbank die Ortsangaben ausgelesenen wird,
- wobei mit den Informationen ferner Deskriptoren übertragen werden, die mit gegebenenfalls vorhandenen gleichartigen Deskriptoren in der jeweiligen Ortsdatenbank verglichen werden und
- wobei die übertragenen Deskriptoren Straßennummern und/oder Abzweigungsnummern und/oder die Endpunkte eines Straßensegments sind.

2. Verfahren nach Anspruch 1, **dadurch gekennzeichnet, dass** zum Auslesen Koordinatenpaare der jeweiligen Ortsdatenbank verwendet werden, die innerhalb eines Toleranzbereichs der übertragenen Koordinatenpaare liegen.

3. Verfahren nach einem der vorhergehenden Ansprüche, **dadurch gekennzeichnet, dass** die Informationen vom Empfänger (2) empfangen und zur Navigationseinrichtung (1) übertragen werden.

4. Verfahren nach einem der vorhergehenden Ansprüche, **dadurch gekennzeichnet, dass** die Informationen von der Navigationseinrichtung (1) zum Empfänger (2) für digital codierte Verkehrsmeldungen übertragen werden.

5. Empfänger für digital codierte Verkehrsmeldungenzur Durchführung des Verfahrens nach einem der Ansprüche 1 bis 4, mit einer Einrichtung zur Übertragung von auf Orte bezogenen Informationen zwischen einer Navigationseinrichtung, die eine erste Ortsdatenbank enthält, bei welcher Koordinatenpaare der Orte und Deskriptoren den Ortsangaben zugeordnet sind, und dem Empfänger, der eine zweite Ortsdatenbank enthält, wobei in der zweiten Ortsdatenbank zu den darin enthaltenen Ortsangaben außer Deskriptoren Koordinatenpaare der Orte abgelegt sind und wobei mit den zu übertragenden Informationen mindestens das Koordinatenpaar des Ortes übertragbar ist, auf den die Informationen bezogen sind, und mit dessen aus der jeweiligen Ortsdatenbank die Ortsangabe auslesbar ist.

6. Navigationseinrichtung zur Durchführung des Verfahrens nach einem der Ansprüche 1 bis 4, die eine erste Ortsdatenbank enthält, bei welcher Koordinatenpaare der Orte und Deskriptoren den Ortsangabe in zugeordnet sind, umfassend eine Einrichtung zur Übertragung von auf Orte bezogenen Informationen zwischen der Navigationseinrichtung und einem Empfänger für digital codierte Verkehrsmeldungen, der eine zweite Ortsdatenbank enthält, in welcher zu den darin enthaltenen Ortsangaben außer Deskriptoren Koordinatenpaare der Orte abgelegt sind, wobei mit den zu übertragenden Informationen mindestens das Koordinatenpaar des Ortes übertragbare ist, auf den die Informationen bezogen sind, und mit dessen Hilfe aus der jeweiligen Ortsdatenbank die Ortsangabe auslesbar ist.

## Claims

1. Method for transmitting information relating to locations, between a navigation device which contains a first location database and in which coordinate pairs of the locations and descriptors are assigned to the location details, and a receiver for digitally encoded traffic messages, which receiver contains a second location database,
- not only descriptors but also coordinate pairs of the locations being stored in the second location database in an assignment to the location details contained therein,
- at least the coordinate pair of the location to which the information relates being transmitted with the information to be transmitted,
- location details being read out from the respective location database by means of at least the transmitted coordinate pair,
- in addition, descriptors which are compared with possible present descriptors of the same type in the respective location database being transmitted with the information, and
- the transmitted descriptors being road numbers and/or turn-off numbers and/or the end points of a road segment.

2. Method according to Claim 1, **characterized in that** coordinate pairs of the respective location database which lie within a tolerance range of the transmitted coordinate pairs are used for reading out.

3. Method according to one of the preceding claims, **characterized in that** the information is received from the receiver (2) and transmitted to the navigation device (1).

4. Method according to one of the preceding claims, **characterized in that** the information from the navigation device (1) is transmitted to the receiver (2) for digitally encoded traffic messages.

5. Receiver for digitally encoded traffic messages for carrying out the method according to one of Claims 1 to 4, having a device for transmitting information relating to locations, between a navigation device which contains a first location database in which coordinate pairs of the locations and descriptors are assigned to the location details, and the receiver which contains a second location database, not only descriptors but also coordinate pairs of the locations being stored in the second location database, in an assignment to the location details contained therein, and at least the coordinate pair of the location to which the information relates and with which the location details can be read out of the respective location database being capable of being transmitted with the information to be transmitted.

6. Navigation device for carrying out the method according to one of Claims 1 to 4 which contains a first location database in which coordinate pairs of the locations and descriptors are assigned to the location details, comprising a device for transmitting information relating to locations, between the navigation device and a receiver for digitally encoded traffic messages, which receiver contains a second location database in which not only descriptors but also coordinate pairs of the locations are stored in an assignment to the location details contained therein, at least the coordinate pair of the location to which the information relates and by means of which the location details can be read out of the respective location database being capable of being transmitted with information to be transmitted.

## Revendications

1. Procédé de transmission d'informations relatives à des lieux, entre un dispositif de navigation, qui contient une première banque de données de lieux dans laquelle des paires de coordonnées de lieux et des descriptions sont associées aux indications de lieux, et un récepteur de messages de circulation codés numériquement, lequel contient une deuxième banque de données de lieux, selon lequel :
- on enregistre des paires de coordonnées des lieux dans la deuxième banque de données de lieux par rapport aux indications de lieux contenues dans celle-ci en dehors des descriptions,
- avec les informations à transmettre, on transmet au moins la paire de coordonnées du lieu, auquel se rapportent les informations,
- les indications de lieux sont lues à partir de la banque de données respective à l'aide d'au moins la paire de coordonnées transmises,
- on transmet en outre avec les informations des descriptions, comparées éventuellement avec des descriptions du même type présentes dans la banque de données de lieux respective, et
- les descriptions transmises sont des numéros de voie et/ou des numéros de déviation et/ou les points finaux d'un segment de voie.

2. Procédé selon la revendication 1,
**caractérisé en ce que**
pour la lecture, on utilise les paires de coordonnées de la banque de données de lieux respective qui se trouvent à l'intérieur d'une zone de tolérance des paires de coordonnées transmises.

3. Procédé selon l'une des revendications précédentes,
**caractérisé en ce que**
les informations sont reçues par le récepteur (2) et transmises vers le dispositif de navigation (1).

4. Procédé selon l'une des revendications précédentes,
**caractérisé en ce que**
les informations sont transmises par le dispositif de navigation (1) vers le récepteur (2) de messages de circulation codés numériquement.

5. Récepteur de messages de circulation codés numériquement pour mettre en oeuvre le procédé selon l'une des revendications 1 à 4, comprenant un dispositif de transmission d'informations relatives à des lieux entre d'une part un dispositif de navigation qui contient une première banque de données de lieux, dans laquelle des paires de coordonnées des lieux et des descriptions sont associées aux indications de lieux, et d'autre part le récepteur qui contient une deuxième banque de données de lieux, dans lequel
des paires de coordonnées des lieux sont enregistrées dans la deuxième banque de données de lieux par rapport aux indications de lieux contenues dans celle-ci en dehors des descriptions, et
au moins la paire de coordonnées du lieu à laquelle se rapportent les informations, peut être transmise avec les informations à transmettre, et
le récepteur permet de lire les indications de lieux à partir de la banque de données de lieux respective.

6. Dispositif de navigation pour mettre en oeuvre le procédé selon l'une des revendications 1 à 4, qui contient une première banque de données de lieux dans laquelle des paires de coordonnées des lieux et des descriptions sont associées aux indications de lieux, comprenant un dispositif de transmission d'informations relatives aux lieux entre le dispositif de navigation et un récepteur de messages de circulation codés numériquement, qui contient une deuxième banque de données de lieux dans laquelle des paires de coordonnées des lieux sont enregistrées par rapport aux indications de lieux qui sont contenues dans celle-ci en dehors des descriptions,
dans lequel au moins la paire de coordonnées du lieu à laquelle se rapportent les informations, peut être transmise avec les informations à transmettre, et
avec lequel on peut lire les indications de lieux à partir de la banque de données de lieux respective.
